(19) Europäisches Patentamt / European Patent Office / Office européen des brevets

(11) **EP 4 779 364 A1**

(12) **EUROPEAN PATENT APPLICATION**
published in accordance with Art. 153(4) EPC

(43) Date of publication:
**22.07.2026 Bulletin 2026/30**

(21) Application number: **24865409.7**

(22) Date of filing: **09.09.2024**

(51) International Patent Classification (IPC):
**G02B 3/00** *(2006.01)*    **G02B 27/02** *(2006.01)*

(52) Cooperative Patent Classification (CPC):
**G02B 3/00; G02B 27/02**

(86) International application number:
**PCT/JP2024/032251**

(87) International publication number:
**WO 2025/057909 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.09.2023 JP 2023147220**

(71) Applicant: Scivax Corporation
**Kawasaki-shi, Kanagawa 212-0032 (JP)**

(72) Inventors:
• **NAWATA Akifumi**
  **Kawasaki-shi Kanagawa 212-0032 (JP)**
• **NAKAMURA Tomonori**
  **Kawasaki-shi Kanagawa 212-0032 (JP)**
• **TANAKA Satoru**
  **Kawasaki-shi Kanagawa 212-0032 (JP)**

(74) Representative: **Gille Hrabal
Partnerschaftsgesellschaft mbB
Patentanwälte
Brucknerstraße 20
40593 Düsseldorf (DE)**

(54) **OPTICAL SYSTEM DEVICE**

(57)     An optical system device capable of emitting linear light by simple structure is provided. An optical system device includes an optical element 2 including lenses 21 arranged periodically at pitches $P_x$ $P_y$ in the x-direction and in the y-direction, and a light emitting unit 1 including light sources 10 arranged at pitches $Q_x$ and $Q_y$ in the x-direction and in the y-direction. When it is defined that j, k, m and n are each a natural number greater than or equal to 1, and focal distances of the lens 21 to a first focal point and to a second focal point are $f_1$ and $f_2$, a distance $L_1$ between the light emitting unit 1 and the first focal plane 111 of the lens 21 satisfies a following equation 1, and the pitches of the light sources 10 of the light emitting unit 1 satisfy $Q_x = jP_x$ or $jQ_x = P_x$;

$$\frac{m P_x^2}{2\lambda} - f_1 < L_1 < \frac{m P_x^2}{2\lambda} + f_1 \qquad \text{(Equation 1)}$$

Moreover, a distance $L_2$ between the light emitting unit 1 and the second focal plane 112 of the lens 21 does not satisfy a following equation 2, or the pitches of the light sources 10 of the light emitting unit 1 do not satisfy $Q_y = kP_y$ and $kQ_y = P_y$.

$$\frac{n P_y^2}{2\lambda} - f_2 < L_2 < \frac{n P_y^2}{2\lambda} + f_2 \qquad \text{(Equation 2)}$$

## Fig. 1

（a）

（b）

（c）

**Description**

TECHNICAL FIELD

The present disclosure relates to an optical system device.

BACKGROUND ART

In recent years, technological developments are being actively made for a Virtual Reality (hereinafter, referred to as a VR) that enables simulated experiences for a virtual space created by a computer as if it is a reality. In the VR, a user recognizes images through a worn Head Mount Display (hereinafter, referred to as an HMD). As for such HMD, there are needs for providing images while the motion of the eyeball of the user and the viewpoint thereof being tracked, and thus technological developments are being made for a tracking scheme called an eye-tracking and for a device with respect to such a scheme. As for the eye-tracking, a particular contact lens is put on an eye so as to measure the motion thereof, or an electrode is placed around the eye so as to measure an electrical potential generated by muscles, etc., for moving the eyeball. Hence, it is necessary to place such a contact lens or an electrode to the user but it takes time and effort, thus burdensome. Conversely, a scheme and a device for such measurement using an optical technology without a direct contact of an object to an eye are also examined (see, for example, Patent Document 1). Moreover, as for a conventional optical technology, an optical system device has been proposed which emits dot patterns (see, for example, Patent Document 2).

CITATION LIST

PATENT LITERATURES

Patent Document 1: WO2021/173276A
Patent Document 2: WO2021/229848A

SUMMARY OF INVENTION

TECHNICAL PROBLEM

However, it is hard to say that a sufficient device has been provided since the device structure is complicated, and the device is expensive. Moreover, there are needs for the eye-tracking by an optical cutting scheme using linear light instead of a dot pattern. Hence, an objective of the present disclosure is to provide an optical system device capable of emitting linear light by simple structure.

SOLUTION TO PROBLEM

In order to accomplish the above objective, an optical system device according to the present disclosure includes:

an optical element including lenses each allowing light with a wavelength $\lambda$ to pass therethrough, the lenses being arranged periodically at a pitch $P_x$ in an x-direction and at a pitch $P_y$ in a y-direction perpendicular to the x-direction; and
a light emitting unit including light sources which emit the lights with the wavelength $\lambda$ to the plurality of lenses, the light sources being arranged at a pitch $Q_x$ in the x-direction and at a pitch $Q_y$ in the y-direction,
in which, when it is defined that j, k, m and n are each a natural number greater than or equal to 1, a focal distance of the lens to a first focal point by a cross-sectional shape of the lens perpendicular to the y-direction is $f_1$, a focal distance of the lens to a second focal point by a cross-sectional shape of the lens perpendicular to the x-direction is $f_2$, a plane including the first focal point and perpendicular to a z-direction is a first focal plane, and a plane including the second focal point and perpendicular to the z-direction is a second focal plane:

a distance $L_1$ between the light emitting unit and the first focal plane of the lens satisfies a following equation 1, and the pitches of the light sources of the light emitting unit satisfy $Q_x = jP_x$ or $jQ_x = P_x$;

$$\frac{m\,P_x^{\,2}}{2\lambda} - f_1 < L_1 < \frac{m\,P_x^{\,2}}{2\lambda} + f_1 \qquad \text{(Equation 1)}$$

and a distance $L_2$ between the light emitting unit and the second focal plane of the lens does not satisfy a following equation 2, or the pitches of the light sources of the light emitting unit do not satisfy $Q_y = kP_y$ and $kQ_y = P_y$.

$$\frac{n\,P_y^{\,2}}{2\lambda} - f_2 < L_2 < \frac{n\,P_y^{\,2}}{2\lambda} + f_2 \qquad \text{(Equation 2)}$$

Moreover, an optical system device according to the present disclosure includes:

an optical element including lenses each allowing light with a wavelength $\lambda$ to pass therethrough, the lenses being arranged periodically at a pitch $P_x$ in an x-direction and at a pitch $P_y$ in a y-direction perpendicular to the x-direction; and a light emitting unit including light sources which emit the lights with the wavelength $\lambda$ to the plurality of lenses, the light sources being arranged in a line at a pitch $Q_y$ in the y-direction,
in which, when it is defined that k, m and n are each a natural number greater than or equal to 1, a focal distance of the lens to a first focal point by a cross-sectional shape of the lens perpendicular to the y-direction is $f_1$, a focal distance of the lens to a second focal point by a cross-sectional shape of the lens perpendicular to the x-direction is $f_2$, a plane including the first focal point and perpendicular to a z-direction is a first focal plane, and a plane including the second focal point and perpendicular to the z-direction is a second focal plane:

a distance $L_1$ between the light emitting unit and the first focal plane of the lens satisfies a following equation 1;

$$\frac{m\,P_x^{\,2}}{2\lambda} - f_1 < L_1 < \frac{m\,P_x^{\,2}}{2\lambda} + f_1 \qquad \text{(Equation 1)}$$

and a distance $L_2$ between the light emitting unit and the second focal plane of the lens does not satisfy a following equation 2, or the pitches of the light sources of the light emitting unit do not satisfy $Q_y = kP_y$ and $kQ_y = P_y$.

$$\frac{n\,P_y^{\,2}}{2\lambda} - f_2 < L_2 < \frac{n\,P_y^{\,2}}{2\lambda} + f_2 \qquad \text{(Equation 2)}$$

Furthermore, an optical system device according to the present disclosure includes:

an optical element including lenses each allowing light with a wavelength $\lambda$ to pass therethrough, the lenses being arranged periodically at a pitch $P_x$ in an x-direction and at a pitch $P_y$ in a y-direction perpendicular to the x-direction; and a light emitting unit including light sources which emit the lights with the wavelength $\lambda$ to the plurality of lenses,
in which, when it is defined that m and n are each a natural number greater than or equal to 1, a focal distance of the lens to a first focal point by a cross-sectional shape of the lens perpendicular to the y-direction is $f_1$, a focal distance of the lens to a second focal point by a cross-sectional shape of the lens perpendicular to the x-direction is $f_2$, a plane including the first focal point and perpendicular to a z-direction is a first focal plane, and a plane including the second focal point and perpendicular to the z-direction is a second focal plane:

a distance $L_1$ between the light emitting unit and the first focal plane of the lens satisfies a following equation 1;

$$\frac{m\,P_x^{\,2}}{2\lambda} - f_1 < L_1 < \frac{m\,P_x^{\,2}}{2\lambda} + f_1 \qquad\qquad \text{(Equation 1)}$$

and a distance $L_2$ between the light emitting unit and the second focal plane of the lens does not satisfy a following equation 2.

$$\frac{n\,P_y^{\,2}}{2\lambda} - f_2 < L_2 < \frac{n\,P_y^{\,2}}{2\lambda} + f_2 \qquad\qquad \text{(Equation 2)}$$

It is preferable that the distance $L_1$ should satisfy a following equation 3:

$$L_1 = \frac{m\,P_x^{\,2}}{2\lambda} \qquad\qquad \text{(Equation 3)}.$$

The light emitting unit may have the light sources arranged hexagonally.

The above-described optical system device may further include:

an imaging unit that receives light from an object; and
an arithmetic unit that calculates a distance to the object based on information from the imaging unit.

It is preferable that the arithmetic unit should be capable of calculating the distance to the object by both an optical cutting scheme and a TOF scheme.

The optical system device according to the present disclosure may include the plurality of light emitting units, and the optical system device may further include a control unit that controls light emission for each of the light emitting units.

ADVANTAGEOUS EFFECTS OF INVENTION

According to the optical system device of the present disclosure, an optical system device capable of emitting linear light by simple structure is provided.

BRIEF DESCRIPTION OF DRAWINGS

FIG. 1 is (a), (b) a schematic cross-sectional view illustrating an optical system device, and (c) a perspective view illustrating a lens according to the present disclosure;
FIG. 2 is a plan view illustrating an optical element according to the present disclosure;
FIG. 3 is a plan view illustrating a light emitting unit according to the present disclosure;
FIG. 4 is a diagram for describing the light emitting unit applied for simulations according to the present disclosure;
FIG. 5 is a diagram illustrating a lens shape of the optical element applied for the simulation according to the present disclosure;
FIG. 6 is a projection diagram illustrating the results of simulations according to the present disclosure;
FIG. 7 is a diagram illustrating a lens shape of the optical element applied for an example according to the present disclosure;
FIG. 8 is a projection diagram illustrating the results of the examples according to the present disclosure; and
FIG. 9 is a schematic plan view illustrating the optical system device according to the present disclosure.

DESCRIPTION OF EMBODIMENTS

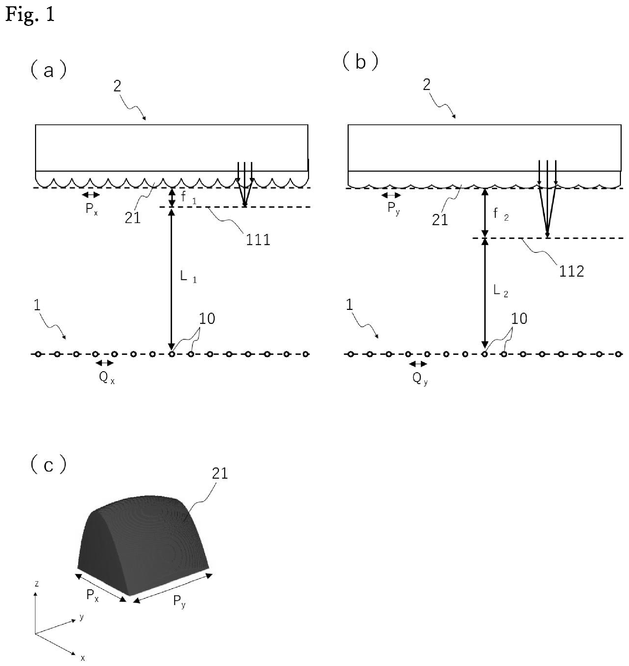

An optical system device according to the present disclosure will be described below. As illustrated in FIG. 1, the optical system device according to the present disclosure mainly includes an optical element 2 and a light emitting unit 1. In this case, when it is defined that directions orthogonal to each other is an x-direction, a y-direction and a z-direction, and the optical-axis direction of the optical element 2 is the z-direction, FIG. 1, part (a) is a diagram of the optical system device as viewed in the y-direction, and FIG. 1, part (b) is a diagram of the optical system device as viewed in the x-direction.

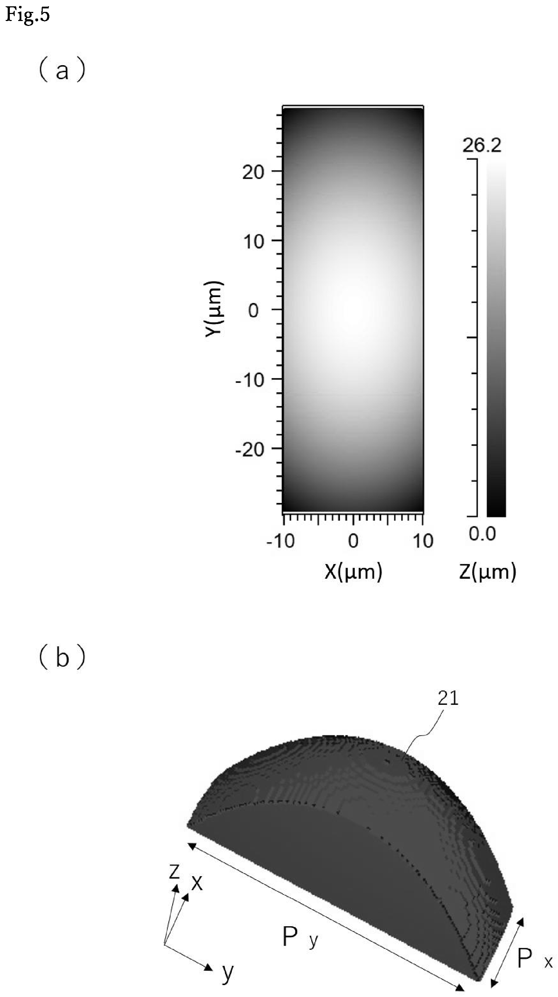

The optical element 2 has lenses 21 each of which allows light with a wavelength $\lambda$ to pass therethrough, and which are arranged at a pitch $P_x$ in the x-direction and at a pitch $P_y$ in the y-direction. Moreover, the lens 21 has a focal distance $f_1$ that is to a first focal point by the cross-sectional shape perpendicular to the y-direction, and a focal distance $f_2$ to a second focal point by the cross-sectional shape perpendicular to the x direction. Note that the term focal distance in this specification means, as illustrated in FIG. 5, a distance between the surface of the lens 21 closest to the focal point and the focal point. Furthermore, the lenses 21 are placed in such a way that the focal point is located at the light-emitting-unit-1 side of the lens 21. According to the optical element 2 of the present disclosure, the greater the focal distance f becomes, such as greater than or equal to 10 $\mu$m, greater than or equal to 20 $\mu$m, greater than or equal to 40 $\mu$m, and greater than or equal to 60 $\mu$m, the more the contrast improves.

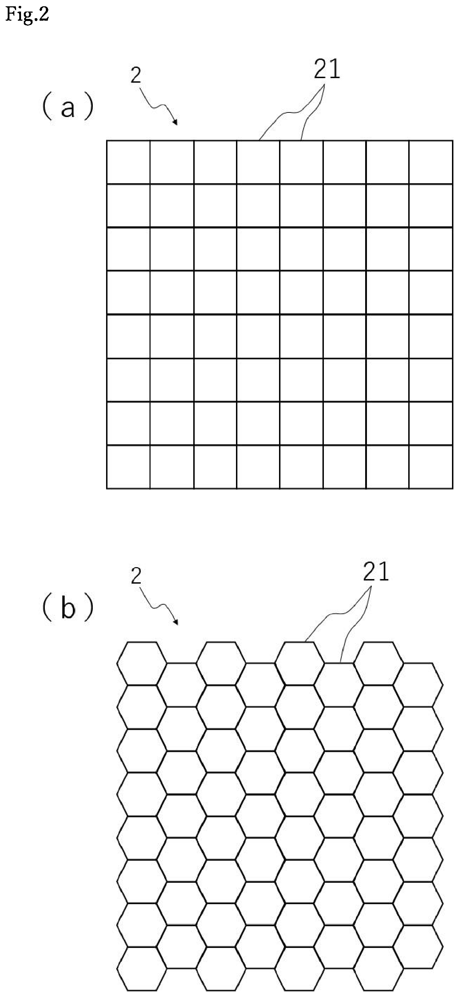

The shape of the lens 21 can be designed freely so as to satisfy the condition to be described below. For example, the shape of lens 21 may be a spherical lens that satisfies $f_1 = f_2$ or an aspherical lens that satisfies $f_1 \neq f_2$. Example specific lens shapes are a convex lens and a concave lens. Moreover, as for the periodical arrangement of the lenses 21, as illustrated in FIG. 2, part (a), lenses in a square shape or in a rectangular lens as viewed in a planar view may be arranged rectangularly, or as illustrated in FIG. 2, part (b), hexagonal lenses as viewed in a planar view may be arranged hexagonally. Furthermore, the lens 21 is not limited to any particular lens as far as it can function as a lens, and for example, a Fresnel lens, a DOE lens, a meta-lens, etc., are applicable. Yet still further, it is preferable that an antireflection film that prevents light from the light emitting unit 1 from being reflected should be formed on the lens 21.

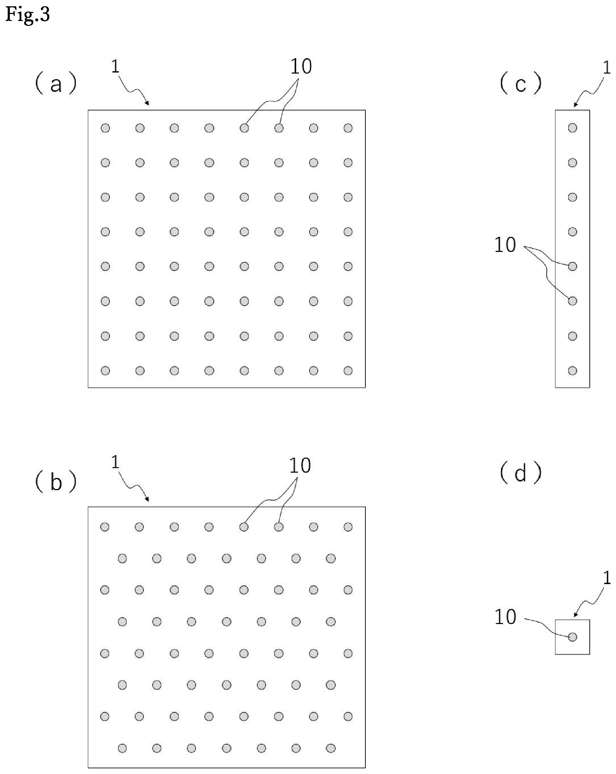

The light emitting unit 1 includes light sources 10 which emit light with a wavelength $\lambda$ to the plurality of lenses 21. An example light emitting unit 1 has, as illustrated in FIG. 3, parts (a) and (b), the light sources 10 arranged at a pitch $Q_x$ in the x-direction and at the pitch $Q_y$ in the y-direction. The light sources 10 may be in any arrangement as far as those are arranged periodically, but for example, a rectangular arrangement or a hexagonal arrangement may be adopted as illustrated in FIG. 3. Moreover, as illustrated in FIG. 3, part (a), the light emitting unit 1 may include the light sources 10 arranged in a line at a pitch $Q_y$ in the y-direction. The light emitting unit 1 may be a multiple-light-source type in which light from a singular light source or from multiple light sources is caused to pass through an aperture with a plurality of thin slits. Moreover, when the light emitting unit 1 is formed by the plurality of light sources, it is preferable that such light sources 10 should be formed on the same plane. Furthermore, as illustrated in FIG. 3, part (d), the light emitting unit 1 may include only one light source 10. A specific example light emitting unit 1 is a Vertical Cavity Surface Emitting LASER (VCSEL) that has a high output expected with a little electric power. As for a VCSEL, there is a single-emitter VCSEL that includes one light source 10 capable of emitting light in a perpendicular direction to the light emission surface, and a multi-emitter VCSEL that includes the plurally of light sources 10. Furthermore, as for the light emitting unit 1, it is preferable that a light absorption film should be formed on portions other than the light sources 10 since noises due to reflected light do not enter therein. Still further, the light source 10 applied to the light emitting unit 1 is not limited to any particular light source as far as it can emit light with a wavelength $\lambda$ to the plurality of lenses 21.

The light emitting unit 1 and the optical element 2 are placed in such a way that the optical-axis direction of the light source 10 of the light emitting unit 1 and the optical-axis direction of the lens 21 of the optical element 2 are consistent with each other.

[Positional Relation Between Light Emitting Unit 1 and Optical Element 2]

Next, a positional relation between the light emitting unit 1 and the optical element 2 will be described for a case in which the light sources 10 as the light emitting unit 1 are arranged at the pitch $Q_x$ in the x-direction and at the pitch $Q_y$ in the y-direction. In this case, it is defined that j, k, m, and n are each a natural number that is greater than or equal to 1, the focal distance of the lens to the first focal point by the cross-sectional shape of the lens 21 perpendicular to the y-direction is $f_1$, and the focal distance of the lens to the second focal point by the cross-sectional shape of the lens perpendicular to the x-direction is $f_2$. Moreover, it is also defined that a plane which includes the first focal point and which is perpendicular to the z-direction is a first focal plane, a plane which includes the second focal point and which is perpendicular to the z-direction is a second focal plane. Furthermore, it is defined that the wavelength of incident light from the light emitting unit 1 is $\lambda$. In this case, a placement is made in such a way that a distance $L_1$ between the light emitting unit 1 and a first focal plane 111 of the lens 21 satisfies the following equation $\alpha$.

$$\frac{m P_1^2}{2\lambda} - a f_1 < L_1 < \frac{m P_1^2}{2\lambda} + b f_1 \qquad \text{(Equation } \alpha \text{)}$$

Simultaneously, the placement is also made in such a way that the pitch of the light sources 10 of the light emitting unit 1 satisfies $Q_x = jP_x$ or $jQ_x = P_x$. In this case, a and b in the equation $\alpha$ are coefficients each representing an allowable error, and satisfy $a \leq 1$, $b \leq 1$. Moreover, the smaller coefficient a in the equation $\alpha$ is preferable, such as a = 0.5, a = 0.3, or a = 0.1. Furthermore, the smaller coefficient b is also preferable, such as b = 0.5, b = 0.3, or b = 0.1. When the coefficients of the equation $\alpha$ are a = b = 1, the equation $\alpha$ becomes the following equation 1.

$$\frac{m P_x^2}{2\lambda} - f_1 < L_1 < \frac{m P_x^2}{2\lambda} + f_1 \qquad \text{(Equation 1)}$$

Moreover, a placement is made in such a way that a distance $L_2$ between the light emitting unit 1 and a second focal plane 112 of the lens 21 does not satisfy the following equation $\beta$.

$$\frac{m P_1^2}{2\lambda} - c f_1 < L_1 < \frac{m P_1^2}{2\lambda} + d f_1 \qquad \text{(Equation } \beta \text{)}$$

Alternatively, the placement is made in such a way that the pitch of the light sources 10 of the light emitting unit 1 do not satisfy $Q_y = kP_y$ and $kQ_y = P_y$. Note that the coefficient c in the equation $\beta$ is $c \geq 1$, and may be c = 2, c = 3, or c = 5. Moreover, the coefficient d is also $d \geq 1$, and may be d = 2, d = 3, or d = 5. When the coefficients of the equation $\beta$ are c = d = 1, the equation $\beta$ becomes the following equation 2.

$$\frac{n P_y^2}{2\lambda} - f_2 < L_2 < \frac{n P_y^2}{2\lambda} + f_2 \qquad \text{(Equation 2)}$$

According to such a placement, linear light extending in the y-direction can be emitted. Note that in this specification, the distances $L_1$ and $L_2$ each mean a distance (an optical path length) in which light travels in vacuum while simultaneously travelling in a medium, and are represented by a product NL, where N is the refractive index of the medium and L is an actual distance.

In this case, it is most preferable that the distance $L_1$ should satisfy the following equation 3.

$$L_1 = \frac{m P_x^2}{2\lambda} \qquad \text{(Equation 3)}$$

Moreover, it is preferable that the placement should be made in such a way that the distance $L_2$ does not satisfy the above equation 2, and furthermore, $Q_y = kP_y$ and $kQ_y = P_y$ are not satisfied.

A positional relation between the light emitting unit 1 and the optical element 2 will be also described for a case in which the light sources 10 as the light emitting unit 1 are arranged in a line at the pitch $Q_y$ in the y-direction. In this case, k, m and n are each a natural number that is greater than or equal to 1, the focal distance by the cross-sectional shape perpendicular to the y-direction of the lens 21 is $f_1$, and the focal distance by the cross-sectional shape perpendicular to the x-direction is $f_2$. In this case, a placement is made in such a way that the distance $L_1$ between the light emitting unit 1 and the first focal plane 111 of the lens 21 satisfies the above equation $\alpha$. Moreover, when the coefficients of the equation $\alpha$ are a = b = 1, the equation $\alpha$ becomes the following equation 1.

$$\frac{m P_x^2}{2\lambda} - f_1 < L_1 < \frac{m P_x^2}{2\lambda} + f_1 \qquad \text{(Equation 1)}$$

Moreover, a placement is made in such a way that the distance $L_2$ between the light emitting unit 1 and the second focal plane 112 of the lens 21 does not satisfy the following equation β.

$$\frac{m P_1^2}{2\lambda} - c f_1 < L_1 < \frac{m P_1^2}{2\lambda} + d f_1 \qquad \text{(equation β)}$$

Alternatively, the placement is made in such a way that the pitch of the light sources 10 of the light emitting unit 1 do not satisfy $Q_y = kP_y$ and $kQ_y = P_y$. Note that the coefficient c of the equation β is $c \geq 1$, and may be c = 2, c = 3 or c = 5. Moreover, the coefficient d is also $d \geq 1$, and may be d = 2, d = 3 or d = 5. When the coefficients of the equation β are c = d = 1, the equation β becomes the following equation 2.

$$\frac{n P_y^2}{2\lambda} - f_2 < L_2 < \frac{n P_y^2}{2\lambda} + f_2 \qquad \text{(Equation 2)}$$

According to such a placement, linear light extending in the y-direction can be emitted.
It is most preferable that the distance $L_1$ should satisfy the following equation 3:

$$L_1 = \frac{m P_x^2}{2\lambda} \qquad \text{(Equation 3)}$$

Moreover, it is preferable that a placement should be made in such a way that the distance $L_2$ does not satisfy the above equation 2, and furthermore, $Q_y = kP_y$ and $kQ_y = P_y$ are not satisfied.
A further description will be given of a positional relation between the light emitting unit 1 and the optical element 2 in a case in which the light emitting unit 1 includes merely the single light source 10. It is defined that m and n are each a natural number greater than or equal to 1, $f_1$ is a focal distance by the cross-sectional shape of the lens 21 perpendicular to the y-direction, and $f_2$ is a focal distance by such a cross-sectional shape perpendicular to the x-direction. In this case, a placement is made in such a way that the distance $L_1$ between the light emitting unit 1 and the first focal plane 111 of the lens 21 satisfies the above equation α. Moreover, when the coefficients of the equation α are a = b = 1, the equation α becomes the following equation 1.

$$\frac{m P_x^2}{2\lambda} - f_1 < L_1 < \frac{m P_x^2}{2\lambda} + f_1 \qquad \text{(Equation 1)}$$

Still further, a placement is made in such a way that the distance $L_2$ between the light emitting unit 1 and the second focal plane 112 of the lens 21 does not satisfy the following equation β.

$$\frac{m P_1^2}{2\lambda} - c f_1 < L_1 < \frac{m P_1^2}{2\lambda} + d f_1 \qquad \text{(Equation β)}$$

Note that the coefficient c in the equation β is $c \geq 1$, and may be c = 2, c = 3 or c = 5. Moreover, the coefficient d is also $d \geq 1$, and may be d = 2, d = 3 or d = 5. When the coefficients of the equation β are c = d = 1, the equation β becomes the following equation 2.

$$\frac{n\,P_y^{\,2}}{2\lambda} - f_2 < L_2 < \frac{n\,P_y^{\,2}}{2\lambda} + f_2 \qquad\qquad \text{(Equation 2)}$$

According to such a placement, linear light extending in the y-direction can be emitted.

In this case, it is most preferable that the distance $L_1$ should satisfy the following equation 3.

$$L_1 = \frac{m\,P_x^{\,2}}{2\lambda} \qquad\qquad \text{(Equation 3)}$$

[Simulations]

Next, simulations were made for the light intensity distribution of, at a far field, the optical system device according to the present disclosure. Note that an optical simulation software BeamPROP (available from Synopsys, Inc.) were applied for the simulations.

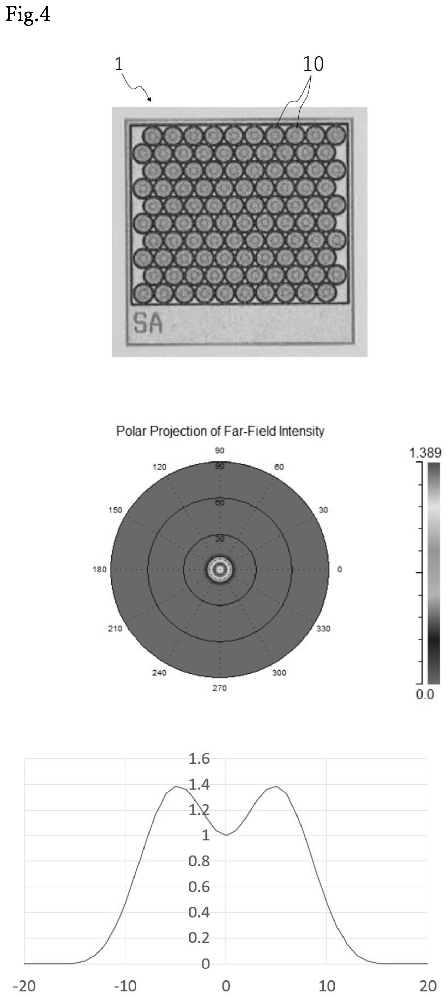

As for the light emitting unit 1 applied, the light sources 10 each emitting light which has a wavelength that is 940 nm ($\lambda = 0.94$) and which is in a bat-wing shape light distribution as illustrated in FIG. 4 were arranged hexagonally ($Q_x = 40$, $Q_y = 69.3$) at a pitch that was 40 $\mu$m. As for the optical element 2 applied, as illustrated in FIG. 5, the lenses 21 were arranged tetragonally at pitches $P_x$ that was 20 $\mu$m ($P_x = 20$) and $P_y$ that was 58 $\mu$m ($P_y = 58$). Moreover, as illustrated in FIG. 5, the lens 21 applied was, in a planar view, in a rectangular shape with lengths that were 20 $\mu$m in the x-direction and 58 $\mu$m in the y-direction, and with a height that was 26 $\mu$m, had the focal distance to the first focal point by the cross-sectional shape of the lens perpendicular to the y-direction that was 12 $\mu$m ($f_1 = 12$), and had the focal distance to the second focal point by the cross-sectional shape perpendicular to the x-direction that was 28 $\mu$m ($f_2 = 28$). Furthermore, the refractive index of the lens was 1.53. The distance $L_1$ between the light emitting unit 1 and the first focal plane 111 of the optical element 2 was 2128 $\mu$m.

In this case, the distance $L_1$ satisfies the above equation 3 ($m = 10$). Moreover, $Q_x = 2P_x$ is satisfied. Conversely, because of the difference in the distance for the first focal plane 111 and for the second focal plane 112, the distance $L_2$ between the light emitting unit 1 and the second focal plane 112 of the optical element 2 becomes 2112 $\mu$m. This does not satisfy the above equation 2. In addition, $Q_y = kP_y$ and $kQ_y = P_y$ are not satisfied.

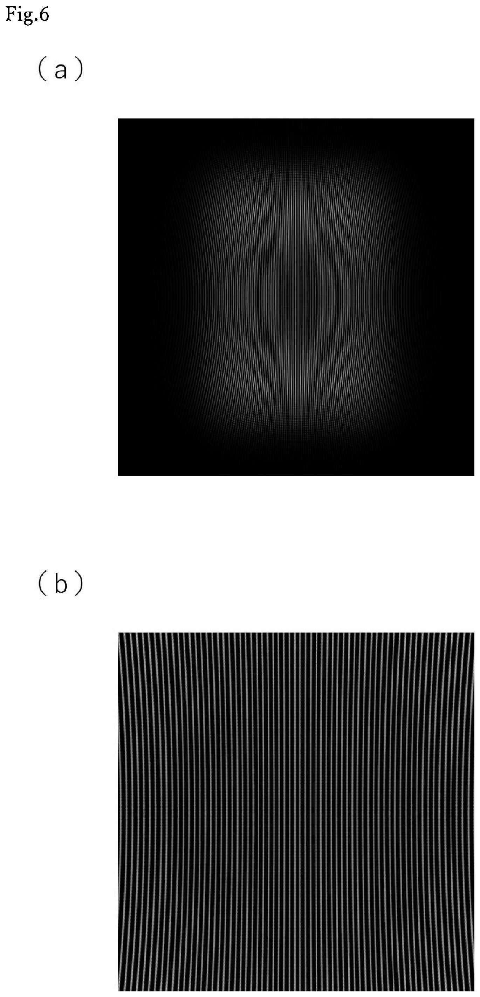

FIG. 6 illustrates a projection diagram that is a simulation result. As illustrated in FIG. 6, it becomes clear that linear projection light that extends in the y-direction is obtainable.

[Examples]

As for the optical system device according to the present disclosure, a light intensity distribution was measured using the actual light source 10 and optical element 2.

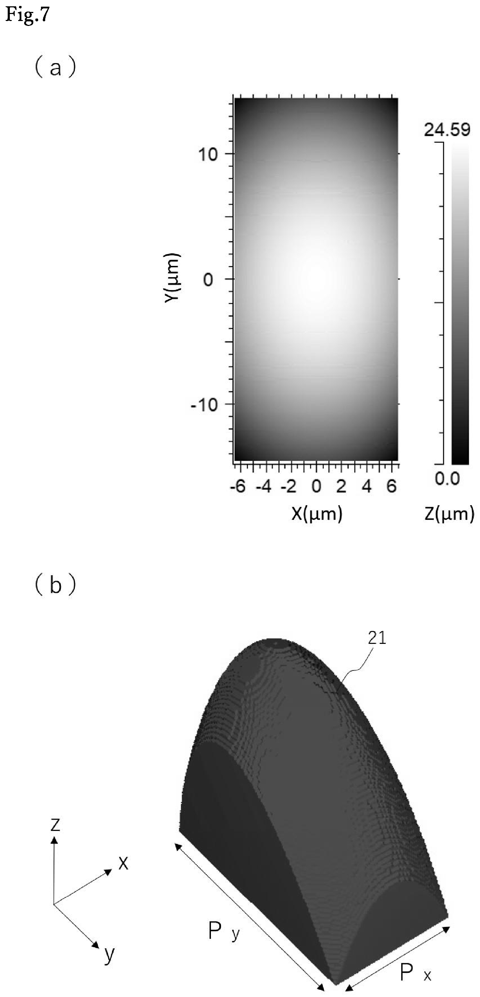

As for the light emitting unit 1 applied, the four light sources 10 each emitting light which has a wavelength that is 940 nm ($\lambda = 0.94$) and which is in a bat-wing shape light distribution were arranged in a line ($Q_y = 7.25$) at a pitch that was 7.25 $\mu$m. As for the optical element 2 applied, as illustrated in FIG. 7, the lenses 21 were arranged tetragonally at pitches $P_x$ that was 13 $\mu$m ($P_x = 13$) and $P_y$ that was 29 $\mu$m ($P_y = 29$). Moreover, as illustrated in FIG. 7, the lens 21 applied was, in a planar view, in a rectangular shape with lengths that were 13 $\mu$m in the x-direction and 29 $\mu$m in the y-direction, and with a height that was 24.59 $\mu$m, had the focal distance to the first focal point by the cross-sectional shape perpendicular to the y-direction that was 5 $\mu$m ($f_1 = 5$), and had the focal distance to the second focal point by the cross-sectional shape perpendicular to the x-direction that was 5 $\mu$m ($f_2 = 5$). Furthermore, the refractive index of the lens was 1.53. The distance $L_1$ between the light emitting unit 1 and the first focal plane 111 of the optical element 2, and the distance $L_2$ to the second focal plane 112 were both 360 $\mu$m.

In this case, the distance $L_1$ satisfies the above equation 3 ($m = 4$). Conversely, the distance $L_2$ does not satisfy the above equation 2. Note that $4Q_y = P_y$ is satisfied.

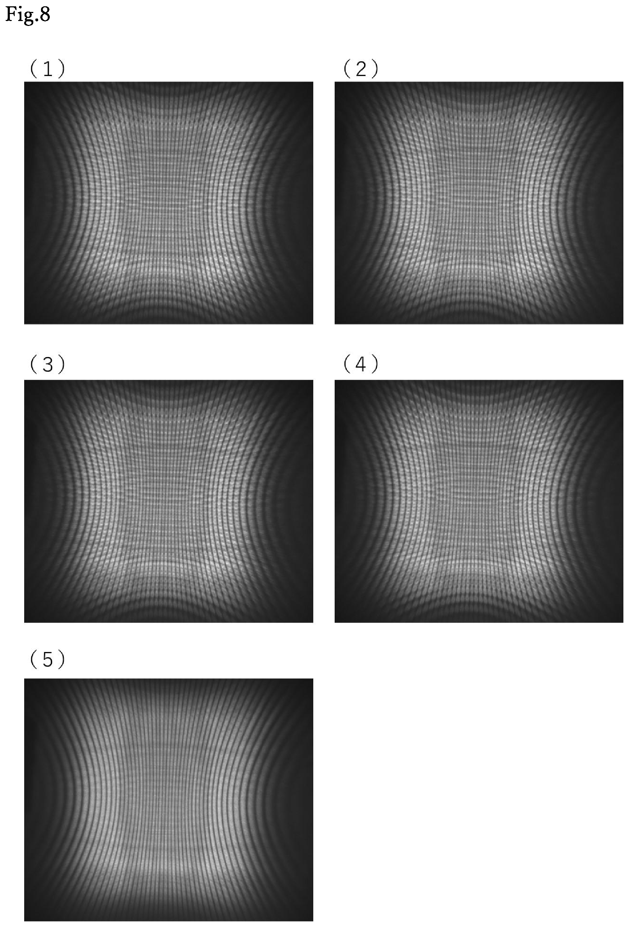

FIG. 8 illustrates a projection drawing that was 22-mm ahead from the lens 21 of the optical system device. FIG. 8, parts (1) to (4) are each a projection drawing when the four light sources 10 were caused to emit light individually. Moreover, FIG. 8, part (5) is a projection drawing when the four light sources 10 were all caused to emit light. In this case, it becomes clear that lights from the respective light sources 10 were laid over on each other, and linear projected light was obtained.

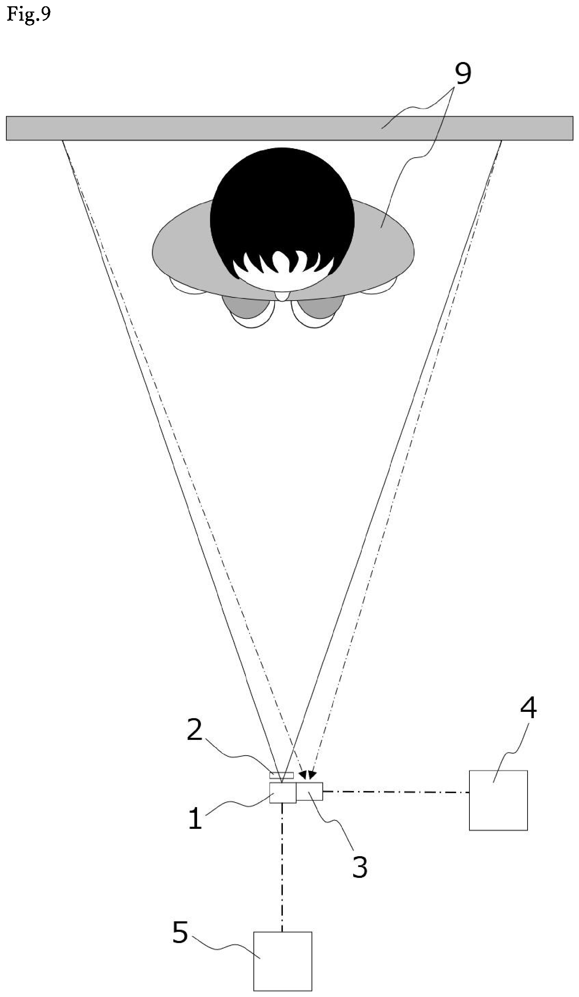

Furthermore, as illustrated in FIG. 9, the optical system device according to the present disclosure may include an imaging unit 3 that receives light from an object. The imaging unit 3 is to detect, among lights emitted from the light emitting unit 1, returning light that is reflected by an object 9, and to convert information, such as the position and the light intensity, into digital data. The imaging unit 3 is not limited to any particular unit as far as it can detect reflected light and can convert information thereof into digital data, and for example, conventional image sensors, such as a CMOS and a CCD, are applicable. Moreover, the imaging unit 3 may be comprehensively formed on the same semiconductor chip together with the above-described light emitting unit 1. Furthermore, when the optical system device of the present disclosure is applied for trigonometrical survey, it is preferable that the light emitting unit 1 and the imaging unit 3 should be placed so as to be apart from each other by a certain distance in the horizontal direction. More specifically, it is preferable to place those units so as to be apart from each other by greater than or equal to 3 cm, more preferably, greater than or equal to 5 cm, and further more preferably, greater than or equal to 10 cm. For example, the light emitting unit 1 and the imaging unit 3 can be respectively placed on the right and left lenses of an eyeglass applied for Virtual Reality (VR) or Augmented Reality (AR), etc., or on the frame thereof.

Still further, the optical system device according to the present disclosure may further include an arithmetic unit 4 that calculates a distance to the object 9 based on the information from the imaging unit 3. The distance to the object 9 means a distance between the object 9 and a reference, such as the light emitting unit 1, the optical element 2, or the imaging unit 3. The arithmetic unit 4 may calculate the distance to the object 9 by any schemes. For example, like a Time Of Flight (TOF) scheme, the distance between the light emitting unit 1 and the object 9 can be calculated from a time until light emitted from the light emitting unit 1 is reflected by the object 9 and is received by the imaging unit 3. Moreover, like an optical cutting scheme, the distance between the light emitting unit 1 and the object 9 can be calculated from a change in position of a line by trigonometrical survey. Furthermore, by changing the number of same kind of light emitting units 1 that are emitting lights, respectively, the distance can be calculated from the presence or absence of a line that can be detected by the imaging unit 3 and the light intensity of the line. The distance between the light emitting unit 1 and the object 9 calculated as described above is applicable for various technologies, such as three-dimensional measurement and auto-focusing.

Note that the optical cutting scheme and the trigonometric survey are to measure an angle and to calculate the distance to the object 9. Hence, when the distance to the object 9 becomes far, the changing angle becomes small, and thus an error increases. Conversely, the TOF scheme is to calculate the distance between the light emitting unit 1 and the object 9 from a time until light emitted from the light emitting unit 1 is reflected by the object 9 and is received by the imaging unit 3. Hence, when the distance to the object 9 becomes close, the time becomes short, and thus an error increases. Accordingly, it is preferable that the arithmetic unit 4 should be able to calculate the distance to the object 9 by both the optical cutting scheme and the TOF scheme. According to such a configuration, when the distance to the object 9 is close, the measurement result by the optical cutting scheme is utilized, and when the distance to the object 9 is far, the measurement result by the TOF scheme is utilized. This enables a further precise distance measurement.

Yet still further, the optical system device according to the present disclosure may include the plurality of light emitting units 1. In this case, when the light emitting units that have the cycle of the light sources in the x-direction overlapping with each other are the same kind of light emitting units, linear lights emitted from the same kind of light emitting units, respectively, overlap with each other. Moreover, when the light emitting units that have the cycle of the light sources in the x-direction not overlapping with each other are the different kinds of light emitting units, linear lights emitted from the different kinds of light emitting units, respectively, do not overlap with each other, and are displaced from each other. Accordingly, when the number of same kind of light emitting units that are emitting lights, respectively, is controlled, the light intensity of a line can be adjusted. Moreover, when the respective light emissions by the different kinds of light emitting units are changed and controlled, the position of a line can be adjusted. Furthermore, when the number of different kinds of light emitting units that are emitting lights, respectively, is controlled, the number of lines can be adjusted. In view of those, the optical system device according to the present disclosure may further include a control unit 5 that controls light emission for each light emitting unit. Needless to say, the light emitting unit 1 may be configured to include both the same kind of light emitting units and the different kinds of light emitting units.

The control unit 5 controls light emission for each light emitting unit 1. The control unit 5 may control the light emitting unit 1 in any scheme, but for example, the light emission for each light emitting unit 1 can be controlled based on distance information that is calculated by the arithmetic unit. As for the control scheme on the light emission by the light emitting unit 1, for example, the control may be made in such a way that the shorter the distance to the object 9 becomes, the more the number of different kinds of light emitting units that are emitting lights, respectively, is increased, and, the longer the distance to the object 9 becomes, the more the number of different kinds of light emitting units that are emitting lights, respectively, is reduced. According to such a control, when the distance to the object 9 is short, the number of lines is increased so as to increase the resolution, and when the distance to the object 9 is long, the number of lines is reduced so as to reduce the energy consumption.

Moreover, as for the other control scheme on, by the control unit 5, light emission of the light emitting unit 1, for example, a control may be made in such a way that the shorter the distance to the object 9 becomes, the more the number of same kind of light emitting units that are emitting lights, respectively, is reduced, and, the longer the distance to the object 9 becomes, the more the number of same kind of light emitting units that are emitting lights, respectively, is increased. According to such a control, when the distance to the object 9 is short, the light intensity of a line is reduced so as to reduce the energy consumption, and when the distance to the object 9 is long, the light intensity of the line is increased so as to enable a long-distance measurement.

Furthermore, as for the other control scheme on, by the control unit 5, light emission of the light emitting unit 1, a control may be made in such a way that the different kinds of light emitting units 1 are caused to emit light in sequence. This changes the position of a line. Hence, the arithmetic unit 4 can measure the distance between the light emitting unit 1 and the object 9 from the change in position of the line by trigonometric survey.

The control unit is not limited to any particular unit as far as it can control light emission by the light source for each light emitting unit based on information from the imaging unit 3, and for example, a conventional computer or CPU, etc., is applicable.

REFERENCE SIGNS LIST

1 Light emitting unit
2 Optical element
3 Imaging unit
4 Arithmetic unit
5 Control unit
9 Object
10 Light source
21 Lens
111 First focal plane
112 Second focal plane

**Claims**

1. An optical system device comprising:

an optical element comprising lenses each allowing light with a wavelength $\lambda$ to pass therethrough, the lenses being arranged periodically at a pitch $P_x$ in an x-direction and at a pitch $P_y$ in a y-direction perpendicular to the x-direction; and
a light emitting unit comprising light sources which emit the lights with the wavelength $\lambda$ to the plurality of lenses, the light sources being arranged at a pitch $Q_x$ in the x-direction and at a pitch $Q_y$ in the y-direction,
wherein when it is defined that j, k, m and n are each a natural number greater than or equal to 1, a focal distance of the lens to a first focal point by a cross-sectional shape of the lens perpendicular to the y-direction is $f_1$, a focal distance of the lens to a second focal point by a cross-sectional shape of the lens perpendicular to the x-direction is $f_2$, a plane including the first focal point and perpendicular to a z-direction is a first focal plane, and a plane including the second focal point and perpendicular to the z-direction is a second focal plane:

a distance $L_1$ between the light emitting unit and the first focal plane of the lens satisfies a following equation 1, and the pitches of the light sources of the light emitting unit satisfy $Q_x = jP_x$ or $jQ_x = P_x$;

$$\frac{m P_x^2}{2\lambda} - f_1 < L_1 < \frac{m P_x^2}{2\lambda} + f_1 \qquad \text{(Equation 1)}$$

and a distance $L_2$ between the light emitting unit and the second focal plane of the lens does not satisfy a following equation 2, or the pitches of the light sources of the light emitting unit do not satisfy $Q_y = kP_y$ and $kQ_y = P_y$.

$$\frac{n\,P_y^{\,2}}{2\lambda} - f_2 < L_2 < \frac{n\,P_y^{\,2}}{2\lambda} + f_2 \qquad \text{(Equation 2)}$$

2. An optical system device comprising:

an optical element comprising lenses each allowing light with a wavelength $\lambda$ to pass therethrough, the lenses being arranged periodically at a pitch $P_x$ in an x-direction and at a pitch $P_y$ in a y-direction perpendicular to the x-direction; and
a light emitting unit comprising light sources which emit the lights with the wavelength $\lambda$ to the plurality of lenses, the light sources being arranged in a line at a pitch $Q_y$ in the y-direction,
wherein when it is defined that k, m and n are each a natural number greater than or equal to 1, a focal distance of the lens to a first focal point by a cross-sectional shape of the lens perpendicular to the y-direction is $f_1$, a focal distance of the lens to a second focal point by a cross-sectional shape of the lens perpendicular to the x-direction is $f_2$, a plane including the first focal point and perpendicular to a z-direction is a first focal plane, and a plane including the second focal point and perpendicular to the z-direction is a second focal plane:

a distance $L_1$ between the light emitting unit and the first focal plane of the lens satisfies a following equation 1;

$$\frac{m\,P_x^{\,2}}{2\lambda} - f_1 < L_1 < \frac{m\,P_x^{\,2}}{2\lambda} + f_1 \qquad \text{(Equation 1)}$$

and a distance $L_2$ between the light emitting unit and the second focal plane of the lens does not satisfy a following equation 2, or the pitches of the light sources of the light emitting unit do not satisfy $Q_y = kP_y$ and $kQ_y = P_y$.

$$\frac{n\,P_y^{\,2}}{2\lambda} - f_2 < L_2 < \frac{n\,P_y^{\,2}}{2\lambda} + f_2 \qquad \text{(Equation 2)}$$

3. An optical system device comprising:

an optical element comprising lenses each allowing light with a wavelength $\lambda$ to pass therethrough, the lenses being arranged periodically at a pitch $P_x$ in an x-direction and at a pitch $P_y$ in a y-direction perpendicular to the x-direction; and
a light emitting unit comprising a single light source which emits the light with the wavelength $\lambda$ to the plurality of lenses,
wherein when it is defined that m and n are each a natural number greater than or equal to 1, a focal distance of the lens to a first focal point by a cross-sectional shape of the lens perpendicular to the y-direction is $f_1$, a focal distance of the lens to a second focal point by a cross-sectional shape of the lens perpendicular to the x-direction is $f_2$, a plane including the first focal point and perpendicular to a z-direction is a first focal plane, and a plane including the second focal point and perpendicular to the z-direction is a second focal plane:

a distance $L_1$ between the light emitting unit and the first focal plane of the lens satisfies a following equation 1;

$$\frac{m\,P_x^{\,2}}{2\lambda} - f_1 < L_1 < \frac{m\,P_x^{\,2}}{2\lambda} + f_1 \qquad \text{(Equation 1)}$$

and a distance $L_2$ between the light emitting unit and the second focal plane of the lens does not satisfy a following equation 2.

$$\frac{n\,P_y^2}{2\lambda} - f_2 < L_2 < \frac{n\,P_y^2}{2\lambda} + f_2 \qquad \text{(Equation 2)}$$

4. The optical system device according to any one of claims 1 to 3, wherein the distance $L_1$ satisfies a following equation 3:

$$L_1 = \frac{m\,P_x^2}{2\lambda} \qquad \text{(Equation 3).}$$

5. The optical system device according to claim 1, wherein the light emitting unit has the light sources arranged hexagonally.

6. The optical system device according to any one of claims 1 to 3, further comprising:

an imaging unit that receives light from an object; and
an arithmetic unit that calculates a distance to the object based on information from the imaging unit.

7. The optical system device according to claim 6, wherein the arithmetic unit is capable of calculating the distance to the object by both an optical cutting scheme and a TOF scheme.

8. The optical system device according to any one of claims 1 to 3, comprising the plurality of light emitting units, the optical system device further comprising a control unit that controls light emission for each of the light emitting units.

Fig. 1

（a）

（b）

（c）

Fig.2

（a）

（b）

Fig.3

Fig.4

Polar Projection of Far-Field Intensity

Fig.5

（a）

（b）

Fig.6

（a）

（b）

Fig.7

（a）

（b）

Fig.8

（1）

（2）

（3）

（4）

（5）

Fig.9

## INTERNATIONAL SEARCH REPORT

| International application No. |
| --- |
| **PCT/JP2024/032251** |

| A. | CLASSIFICATION OF SUBJECT MATTER |
| --- | --- |

*G02B 3/00*(2006.01)i; *G02B 27/02*(2006.01)i
FI:   G02B3/00 A; G02B27/02 Z

According to International Patent Classification (IPC) or to both national classification and IPC

| B. | FIELDS SEARCHED |
| --- | --- |

Minimum documentation searched (classification system followed by classification symbols)

G02B3/00; G02B27/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2021/229848 A1 (SCIVAX CORPORATION) 18 November 2021 (2021-11-18) paragraphs [0003], [0012]-[0013], [0042], [0044]-[0045], [0054], [0064], [0106], [0112], [0115]-[0119], fig. 58(a)-(c) | 1-6, 8 |
| Y | paragraphs [0003], [0012]-[0013], [0042], [0044]-[0045], [0054], [0064], [0106], [0112], [0115]-[0119], fig. 58(a)-(c) | 7 |
| Y | JP 2022-537014 A (WACKER CHEMIE AG) 23 August 2022 (2022-08-23) paragraph [0034] | 7 |
| Y | JP 2017-138331 A (SEMICONDUCTOR ENERGY LABORATORY CO., LTD.) 10 August 2017 (2017-08-10) paragraph [0004] | 7 |
| A | WO 2023/026987 A1 (SCIVAX CORPORATION) 02 March 2023 (2023-03-02) entire text, all drawings | 1-8 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **26 September 2024** | **22 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/032251**

| Patent document cited in search report | | | Publication date (day/month/year) | Patent family member(s) | | | Publication date (day/month/year) |
|---|---|---|---|---|---|---|---|
| WO | 2021/229848 | A1 | 18 November 2021 | US | 2023/0204824 | A1 | |
| | | | | paragraphs [0003], [0012]-[0013], [0129], [0131]-[0134], [0144]-[0145], [0159]-[0160], [0240], [0246], [0249]-[0253], fig. 58(a)-(c) | | | |
| | | | | CN | 115552278 | A | |
| JP | 2022-537014 | A | 23 August 2022 | US | 2023/0011307 | A1 | |
| | | | | paragraph [0037] | | | |
| | | | | WO | 2021/121558 | A1 | |
| | | | | CN | 113727944 | A | |
| | | | | KR | 10-2022-0002624 | A | |
| | | | | TW | 202126578 | A | |
| JP | 2017-138331 | A | 10 August 2017 | US | 2013/0234027 | A1 | |
| | | | | paragraph [0004] | | | |
| | | | | WO | 2013/133143 | A1 | |
| | | | | TW | 201345249 | A | |
| | | | | CN | 107340509 | A | |
| WO | 2023/026987 | A1 | 02 March 2023 | EP | 4394458 | A1 | |
| | | | | entire text, all drawings | | | |
| | | | | CN | 118103738 | A | |

Form PCT/ISA/210 (patent family annex) (July 2022)

24

**EP 4 779 364 A1**

**Patent documents cited in the description**

- WO 2021173276 A
- WO 2021229848 A